Europäisches Patentamt

European Patent Office

Office européen des brevets

(19)

(11) Numéro de publication : **0 433 156 B1**

(12) **FASCICULE DE BREVET EUROPEEN**

(45) Date de publication du fascicule du brevet :
**12.01.94 Bulletin 94/02**

(51) Int. Cl.$^5$ : **C01B 33/34, B01J 20/18, C10G 25/03**

(21) Numéro de dépôt : **90403517.7**

(22) Date de dépôt : **11.12.90**

(54) **Procédé d'obtention de zéolites 5A à grande stabilité, utiles notamment pour la séparation des paraffines.**

(30) Priorité : **12.12.89 FR 8916411**

(43) Date de publication de la demande :
**19.06.91 Bulletin 91/25**

(45) Mention de la délivrance du brevet :
**12.01.94 Bulletin 94/02**

(84) Etats contractants désignés :
**AT BE CH DE DK ES FR GB GR IT LI LU NL SE**

(56) Documents cités :
**DD-A- 145 366
DD-A- 226 864
FR-A- 1 280 877
US-A- 2 882 243**

(56) Documents cités :
**US-A- 2 908 549
CHEMICAL ABSTRACTS, vol. 92, no. 2, 14
janvier 1980, page 108, abrégé no. 8415j,
Columbus, Ohio, US; & JP-A-79 81 200 (SUMI-
TOMO CHEMICAL CO., LTD) 28-06-1979**

(73) Titulaire : **CECA S.A.
4 - 8, Cours Michelet La Défense 10
F-92800 Puteaux (FR)**

(72) Inventeur : **Plee, Dominique
4, Allée du Moulin
F-78250 Meulan (FR)**

(74) Mandataire : **Haicour, Philippe
ELF ATOCHEM S.A., D.P.I. 4-8, Cours Michelet
La Défense 10 - Cédex 42
F-92091 Paris La Défense (FR)**

EP 0 433 156 B1

## Description

L'objet de l'invention consiste en un procédé de préparation de zéolites 5A à grande stabilité et en leur application à la séparation des paraffines.

Plus précisément, l'invention s'attache à décrire un procédé dans lequel la zéolite 5A est préparée par échange au moyen d'une solution d'un sel calcique, d'une zéolite 4A synthétisée dans des milieux dont la basicité, exprimée en nombre de moles de $Na_2O$ par moles de $H_2O$ est précisément limitée.

La zéolite 5A est utilisée pour séparer les hydrocarbures aliphatiques linéaires des hydrocarbures non linéaires, tels que les espèces isoparaffiniques naphténiques ou aromatiques. Par exemple les paraffines normales peuvent être sélectivement adsorbées à partir de mélanges tels que: n-butane dans isobutane; n-pentane dans isopentane; n-hexane dans iso-hexane; etc... Dans les procédés les plus couramment employés, on met en contact le lit de zéolite, mise sous forme de billes ou d'extrudés, avec le mélange d'hydrocarbures en phase vapeur. L'adsorbat peut être récupéré en augmentant la température ou en réduisant la pression. De façon courante, on préfère utiliser un procédé isotherme dans lequel la désorption s'effectue grâce au balayage par un hydrocarbure aliphatique plus léger comme le butane, ou encore par un mélange azote/ammoniac ou azote/eau/ammoniac.

Les zéolites 5A se préparent à partir de zéolite 4A. La structure et les propriétés de ces zéolites A, qui dans leur forme anhydre répondent à la formule générale:

$$Na_{12} Si_{12} Al_{12} O_{48} ,$$

sont bien connues et abondamment décrites dans la littérature, notamment par les brevets de Milton (US 2 882 243) et Barrer (FR 1 257 034). Selon ces auteurs, on les obtient par cristallisation à partir de gels dont le domaine de composition s'étend sur

$$(1,35 \text{ à } 4,5) \, Na_2O - (1,5 \text{ à } 3) \, SiO_2 - Al_2O_3 - (50 \text{ à } 900) \, H_2O .$$

Sous sa forme hydratée, la zéolite 4A possède des pores dont l'ouverture est de 4A° (0,4 nanomètres). Elle peut être transformée en la forme calcique par échange avec un sel de calcium en solution aqueuse, et on obtient une zéolite dont les pores ont une ouverture effective de 5A° quand au moins 60 % et jusqu'à 95 % du nombre d'ions sodium initialement présents dans la structure ont été remplacés par les ions calcium.

Divers procédés d'échange ont déjà été décrits. Par exemple, le brevet d'Allemagne de l'Est DD 226 864 (04.09.85), pour un procédé d'échange à partir d'une zéolite 4A à réaction très sodique et dont la capacité d'adsorption d'ammoniac est comprise entre 150 et 400 ml/g. L'échange s'effectue en présence de $CaCl_2$ à 25°C pendant 6 heures de manière à obtenir une zéolite 5A contenant de l'ordre de 14 % en CaO. La zéolite 5A ainsi obtenue bien que possédant de bonnes propriétés d'adsorption des n-paraffines ne résiste que médiocrement à l'action répétée de la vapeur d'eau à 380°C.

On cite également le brevet des Etats Unis d'Amérique N° 2 908 549 (13.10.59) qui divulgue et revendique un procédé caractérisé par un échange calcique effectué à un pH maintenu à 11 tout au long de la réaction par addition de CaO. Elle fournit une zéolite un peu plus stable, mais au prix d'une capacité d'adsorption plus réduite.

Le principal problème que l'on rencontre lors de l'utilisation industrielle des zéolites en séparation des paraffines, est celui d'une baisse d'activité du tamis moléculaire au cours des cycles d'adsorption-désorption et des opérations de régénération. La vapeur d'eau, générée au cours des opérations de régénération oxydante destinées à éliminer le coke hydrocarboné qui s'accumule dans le tamis zéolitique, a un effet dommageable à température élevée sur les propriétés d'adsorption et la sélectivité du tamis.

Une des méthodes pour s'affranchir de l'inconvénient majeur que constitue la sensibilité du tamis 5A à la vapeur d'eau consiste, selon le brevet d'Allemagne de l'Est DD 145.366, à désorber la zéolite 5A dans un courant d'ammoniac, à une température inférieure à 400°C, avant de l'utiliser en séparation des paraffines. La zéolite 5A ainsi traitée conserve effectivement mieux sa capacité d'adsorption des n-paraffines que la zéolite 5A ordinairement traitée, mais au prix de la grande complication industrielle que représente un traitement à l'ammoniac.

On a maintenant trouvé qu'il était possible de limiter efficacement la désactivation du tamis moléculaire en utilisant, pour fabriquer la zéolite 5A, une zéolite 4A synthétisée dans un milieu constitué par une solution ou un gel contenant les constituants du silicate de sodium et de l'aluminate de sodium, dont la basicité, exprimée par le rapport molaire $Na_2O/H_2O$ est inférieure à $1,3 \, 10^{-2}$, et de préférence inférieure à $10^{-2}$.

Le procédé d'obtention de la zéolite 5A selon l'invention consiste donc:
- à synthétiser une zéolite 4A dans un milieu dont la composition est représentée par :

$$x \, Na_2O - y \, SiO_2 - Al_2O_3 - z \, H_2O$$

où y (rapport molaire $SiO_2/Al_2O_3$) est compris entre 1 et 2,5,
où x/y (rapport molaire $Na_2O/SiO_2$) est compris entre 0,9 et 2,
où z/x (rapport molaire $H_2O/Na_2O$) est compris entre 77 et 200,

2

- à échanger la zéolite 4A ainsi obtenue à l'aide d'un sel de calcium soluble,
- à agglomérer cette zéolite échangée au moyen d'un liant argileux,
- et à activer thermiquement ledit aggloméré.

Pour réaliser le milieu de synthèse de la zéolite 4A, on prépare une solution ou un gel par mélange de quantités convenables d'une solution de silicate de sodium et d'une solution d'aluminate de sodium; on porte le mélange à une température d'environ 100°C, et on l'abandonne à la cristallisation pendant quelques heures. Les sources de silice ne sont pas limitées au silicate de sodium: on peut également procéder à partir de gels de silice ou de silices colloïdales.

Toutes les valeurs de basicité inférieures aux limites susmentionnées peuvent être employées sans préjudice quant aux propriétés du produit final; un minimum de basicité est néanmoins requis afin que l'opération de synthèse se déroule dans des durées compatibles avec les exigences d'un procédé industriel.

Selon un mode avantageux de réalisation de l'invention, on augmente la vitesse de cristallisation des zéolites 4A formées dans un milieu dont la basicité, exprimée par le rapport $Na_2O/H_2O$, reste toujours inférieure à $1,3 \cdot 10^{-2}$, par l'emploi de techniques d'ensemencement. Ces techniques, outre qu'elles tendent à améliorer l'économie générale du procédé en réduisant la durée de la fabrication, offrent l'avantage de réguler assez facilement la taille finale des cristaux par ajustement de la proportion de germes de cristallisation ajoutés dans le gel de synthèse.

Bien que lesdites techniques soient connues de l'homme de l'art (voir notamment USP 4 173 662), on précise ci-après les types de germes de cristallisation qui paraissent particulièrement adaptés à l'invention.

On retiendra par exemple les cristaux de taille comprise entre 0,5 et 1 $\mu$, que l'on peut synthétiser directement dans des gels de forte basicité après un mûrissement convenable. D'autres types de germes de cristallisation peuvent être obtenus par broyage de cristaux de zéolite en phase humide. On génère, par ce procédé, un grand nombre de petits éclats cristallins ayant un pouvoir certain d'ensemencement. Une troisième méthode d'ensemencement consiste à préparer un gel de nucléation qui, une fois mûri à température et pendant une durée adéquate, possède un pouvoir d'ensemencement suffisant pour accélérer une réaction de cristallisation.

La zéolite 4A que l'on obtient ainsi dans un milieu de basicité contrôlée par son rapport $Na_2O/H_2O$ inférieur à $1,3 \cdot 10^{-2}$ présente une particularité cristalline qui permet de l'identifier assez aisément par observation sous microscope. Le réseau cristallin de la zéolite 4A est cubique, et la morphologie de ses cristaux est également cubique; mais dans les conditions courantes de leur obtention, les cristaux, ou du moins les cristaux les plus volumineux, apparaissent sous forme de cubes avec troncatures d'arêtes (les faces principales correspondant aux plans réticulaires 100, et les troncatures d'arêtes aux plans 110). La zéolite 4A obtenue ici cristallise sous forme de cubes sans troncatures apparentes; ce que l'on peut traduire en disant que le rapport entre les surfaces des faces 110 et 100 est inférieur à 0,05.

La transformation de la zéolite 4A ainsi synthétisée en zéolite 5A se fait, selon une méthode bien connue, par échange en milieu aqueux à l'aide d'un sel de calcium. Le sel de calcium utilisé est un sel soluble; ce peut être un chlorure, un nitrate, un perchlorate, un salicylate, un thiosulfate, un permanganate, un acétate, un formiate. On travaille fréquemment dans des suspensions contenant environ de 100 à 200 grammes de tamis moléculaire par litre. Les proportions pondérales en sel de calcium par rapport au tamis moléculaire peuvent être comprises entre 40 % et 200 %. On améliore l'économie du procédé quant au coût du réactif calcique en effectuant plusieurs échanges pour atteindre le taux d'échange souhaité. On opère de préférence à des températures comprises entre 60°C et 100°C, sous pression autogène, sur des durées qui n'excèdent pas 2 heures.

La morphologie des cristaux de zéolite 4A de départ se retrouve dans celle de la zéolite 5A selon l'invention, à savoir qu'elle est constituée de cristaux cubiques sans troncatures apparentes, c'est-à-dire caractérisés par un rapport entre les surfaces des faces 110 et 100 inférieur à 0,05, cette caractéristique étant à lire sur les plus gros cristaux, notamment les cristaux dont la taille est supérieure à environ quatre microns.

Une fois la zéolite 5A obtenue, on procède à son agglomération, selon les techniques bien connues de l'homme de métier, soit sous forme d'extrudés après malaxage des poudres de zéolite, de liant, d'additifs et d'eau dans un malaxeur à meules, soit sous forme de billes. Les liants d'agglomération appartiennent essentiellement à la famille des argiles et sont choisis parmi le groupe des hormites pour la palygorskite et la sépiolite, parmi le groupe des smectites pour la bentonite et parmi la famille des kaolins.

Les additifs sont destinés à simplifier les opérations d'agglomération et conférer aux agglomérés de bonnes propriétés mécaniques. Ils sont bien connus de l'homme du métier; ce sont par exemple les composés de la famille des lignosulfonates sous leurs diverses formes ioniques, les composés de la famille des polysaccharides comme l'hydroxyéthylcellulose ou la carboxyméthylcellulose.

On procède enfin à l'activation des granulés du tamis 5A. Ces tamis étant sensibles à la dégradation hydrothermale, l'obtention d'une bonne capacité initiale d'adsorption du tamis exige que cette activation soit exécutée avec un soin tout particulier. On utilisera avec avantage le procédé d'activation par percolation par un gaz chaud décrit dans la demande de brevet français N° 89 13065.

Les tamis moléculaires selon l'invention, parce qu'ils ont une excellente tenue à la désactivation, sont très bien adaptés aux procédés cycliques de séparation ou d'épuration de gaz ou de liquides, tels les procédés de séparation d'hydrocarbures (par exemple de normales et isoparaffines), les procédés de désulfuration de gaz naturels ou de coupes d'hydrocarbures liquides (élimination des mercaptans).

Leur utilisation est tout particulièrement avantageuse pour la séparation des n-paraffines et des isoparaffines en phase vapeur, notamment dans les procédés isothermes et isobares à cycles adsorption/désorption, comme illustrés par l'un des exemples ci-dessous.

EXEMPLES

EXEMPLE 1: Préparation d'une zéolite 5A selon l'invention.

On synthétise d'abord une zéolite 4A à partir d'un gel de composition:
$$2,7 \ Na_2O - 1,92 \ SiO_2 - Al_2O_3 - 297 \ H_2O$$
Pour cela, on prépare d'une part 593 ml d'une solution de silicate de sodium contenant 26,96 g de $SiO_2$ et 8,03 g de $Na_2O$, et d'autre part, à partir de soude et d'alumine, 658 ml d'une solution d'aluminate de sodium, contenant 23,86 g d'$Al_2O_3$ et 31,14 g de $Na_2O$.

Après mélange des deux réactifs à l'aide d'un agitateur pendant 5 minutes, on porte le gel à une température de 100°C en bain thermostaté sous légère agitation, le temps de montée en température étant de 35 minutes. Après 9 heures de cristallisation, on récupère par filtration et lavage avec de l'eau permutée un solide que le microscope électronique à balayage montre comme étant constitué de cubes apparemment parfaits (rapport des faces 110 aux faces 100 pratiquement nul).

La zéolite 4A ainsi obtenue est échangée à 100°C en une fois dans une solution de chlorure de calcium 1,46 M. La concentration pondérale en zéolite est de 135 g/l, la durée d'échange est de 1 heure.

On met ensuite en forme la zéolite 5A, par malaxage de quatre parties de zéolite avec une partie d'un mélange de 2/3 d'attapulgite et de 1/3 de montmorillonite, d'agent de filage et d'eau, puis extrusion à travers une filière de 1,6 mm.

On active ensuite le granulé à 600°C, dans une étuve ventilée, sur une épaisseur de couche 1/2 cm. Après refroidissement, on obtient un aggloméré de zéolite 5A dont la capacité d'adsorption d'azote, mesurée à 25°C sous 21kPa de pression d'équilibre, est de 0,128 mMole/g.

EXEMPLE 2: Efficacité comparée de zéolite 5A dans une séparation n-paraffines / isoparaffines

On compare ici les performances du tamis moléculaires 5A selon l'invention de l'exemple 1 à celles d'un tamis 5A selon l'art antérieur, c'est-à-dire obtenu à partir d'une zéolite 4A préparée dans un milieu classique représenté par la composition
$$2 \ Na_2O - 1,9 \ SiO_2 - Al_2O_3 - 80 \ H_2O,$$
l'échange calcique, l'agglomération et l'activation en étant ensuite réalisés comme dans l'exemple 1. La capacité d'adsorption d'azote de cette zéolite standard, mesurée à 25°C sous 21 kPa de pression d'équilibre, est de 0,12 mMole/g.

Le mélange d'hydrocarbures soumis à la séparation n-paraffines / isoparaffines est une coupe de kérosène, caractérisée par un point initial de distillation de 158°C et un point final de 249°C, et par un rapport pondéral entre isoparaffines et paraffines normales de 66/34. Dans ces essais, on a volontairement ajouté de l'hexène normal dans la coupe paraffinique pendant la phase d'adsorption pour amplifier l'adsorption d'hydrocarbures linéaires et accuser ainsi le vieillissement dû au cokage (voir exemple 3 plus bas).

Le procédé de séparation est isotherme et isobare. Il est cyclique, chaque cycle durant 35 minutes et comprend quatre étapes: adsorption des n-paraffines (10 min), purge (5 min), désorption à l'ammoniac (15 min) et purge (5 min). Les purges ont pour effet d'éliminer et de récupérer les hydrocarbures non adsorbés susceptibles de polluer, soit la phase isoparaffinique pendant l'adsorption, soit la phase paraffinique normale pendant la désorption.

Pratiquement, les cycles d'adsorption-désorption se déroulent ainsi. On introduit 500 cm3 de tamis dans une colonne de 2,7 cm de diamètre et 1,50 cm de hauteur. La température du tamis est amenée à 380°C sous un courant d'azote et la pression à 7 bars, puis on démarre les cycles d'adsorption-désorption sans changer les conditions de température et de pression.

- Phase d'adsorption

Le débit est de 185 l/h d'un gaz constitué de 78% d'azote (en volume), 21% de coupe paraffinique et 1% d'hexène. L'adsorption dure 10 minutes.

- Phase de purge

On arrête la coupe paraffinique et on maintient un débit d'azote à 145 l/h pendant 5 minutes.

- Phase de désorption

On passe un débit de 185 l/h d'un gaz constitué de 50 % d'azote et 50 % d'ammoniac pendant 15 minutes.

- Phase de purge

Elle est identique à la précédente.

Après 200 cycles, on mesure capacité d'adsorption résiduelle de la zéolite en paraffines (quantité de paraffines retenue par 100 grammes de zéolite), et la teneur en n-paraffines dans la phase désorbée. Les résultats, très clairement en faveur de la zéolite 5A selon l'invention, sont consignés dans le tableau ci-dessous.

|  | Capacité d'adsorption en paraffines (g/100 g) | n-paraffines dans la phase désorbée (%) |
|---|---|---|
| TAMIS STANDARD | 2,17 | 82 |
| TAMIS SELON L'INVENTION | 3,7 | 83 |

EXEMPLE 3

Dans cet exemple, on a procédé à une série de 30 et 550 cycles d'adsorption-désorption dans les conditions de l'exemple 2, et appliqués au même gaz composé de 78 % d'azote, 21 % d'une coupe paraffinique et 1 % d'hexène.

Les résultats sont présentés dans le tableau ci-après.

| | Capacité d'adsorption en paraffines (g/100 g) | | n-paraffines dans la phase désorbée (%) | |
|---|---|---|---|---|
| | après 30 cycles | après 550 cycles | après 30 cycles | après 550 cycles |
| TAMIS STANDARD | 2,4 | 1,43 | 81 | 73 |
| TAMIS SELON L'INVENTION | 3,8 | 3,35 | 83 | 88 |

EXEMPLE 4

Dans la série d'essais que l'on expose maintenant, on a évalué les performances respectives des mêmes zéolites 5A que précédemment quant à leur résistance à la désactivation lors d'opérations de régénération oxydante. Ces deux tamis s'encombrent de coke à peu près de la même façon au cours des cycles d'adsorption/désorption de paraffines. Après environ 550 cycles d'adsorption-désorption, les tamis sont soumis à l'action d'un courant d'azote enrichi de 2,4% d'oxygène pour brûler le coke qui s'est formé. Après chaque régénération oxydante, on soumet les tamis à une nouvelle série de cycles d'adsorption-désorption et on répète l'opération de régénération oxydante lorsque la capacité d'adsorption en n-paraffines est jugée suffisamment basse et ce autant de fois que nécessaire.

Les conditions de la régénération oxydante sont les suivantes.

Le débit d'azote enrichi à 1,4% d'oxygène est de 123 Nl/h et on augmente progressivement en 2 h, la quantité d'oxygène dans l'azote de 1,4 % à 2,4 % pour maintenir cette concentration d'oxygène pendant 24 heures. On procède alors à une nouvelle série de cycles d'adsorption-désorption (205) identiques à ceux de l'exemple 2, puis à une nouvelle régénération par l'oxygène dans les conditions précédemment décrites et à nouveau à 205 cycles d'adsorption-désorption.

Les résultats sont reportés dans le tableau ci-dessous; ils confirment l'inattendue résistance du tamis selon l'invention à la dégradation.

| | Capacité d'adsorption en paraffines (g/100 g) | | n-paraffines dans la phase désorbée (%) | |
|---|---|---|---|---|
| | après 44 cycles | après 205 cycles | après 44 cycles | après 205 cycles |
| TAMIS STANDARD | 1,6 | 0,8 | 61 | 51 |
| TAMIS SELON L'INVENTION | 3,3 | 2,1 | 89 | 92 |

EXEMPLE 5

Les deux tamis précédemment cités sont soumis à une troisième régénération oxydante selon les conditions de l'exemple 4; après quoi, on procède à une série de 55 cycles d'adsorption/désorption.

Le tableau ci-dessous présente les résultats obtenus.

| | Capacité d'adsorption en paraffines (g/100 g) | | n-paraffines dans la phase désorbée (%) | |
|---|---|---|---|---|
| | après 3 cycles | après 55 cycles | après 3 cycles | après 55 cycles |
| TAMIS STANDARD | 1,7 | 0,4 | 69 | 54 |
| TAMIS SELON L'INVENTION | 2,9 | 3 | 90 | 90 |

**Revendications**

1. Procédé d'obtention de zéolite 5A à grande stabilité comprenant :
    - la préparation d'une zéolite 4A,
    - l'échange calcique de ladite zéolite 4A,

- l'agglomération de cette zéolite échangée au moyen d'un liant argileux,
- l'activation thermique dudit aggloméré, caractérisé en ce que la zéolite 4A est obtenue à partir d'un milieu dont la composition est représentée par :

$$x\ Na_2O - y\ SiO_2 - Al_2O_3 - z\ H_2O$$

où y (rapport molaire $SiO_2/Al_2O_3$) est compris entre 1 et 2,5,
où x/y (rapport molaire $Na_2O/SiO_2$) est compris entre 0,9 et 2,
où z/x (rapport molaire $H_2O/Na_2O$) est compris entre 77 et 200,

2. Procédé selon la revendication 1, caractérisé en ce que la zéolite 4A est obtenue dans un milieu de cristallisation dans lequel le rapport molaire $H_2O/Na_2O$ est inférieur à 100.

3. Procédé selon les revendications 1 et 2, caractérisé en ce que la cristallisation de la zéolite 4A est accélérée par l'introduction de germes de cristallisation dans la solution de cristallisation.

4. Procédé selon la revendication 3, caractérisé en ce que les germes de cristallisation sont des cristaux broyés de zéolite 4A.

5. Procédé selon la revendication 3, caractérisé en ce que les germes de cristallisation sont des petits cristaux de zéolite 4A de taille comprise entre 0,5 et 1 $\mu$m.

6. Procédé selon la revendication 3, caractérisé en ce que la germination est initiée par un gel de nucléation.

7. Cristaux cubiques de zéolite 5A de taille supérieure à environ 4 microns, dont les faces 110 et 100 ont des surfaces qui sont dans un rapport inférieur à 0,05 .

8. Application des zéolites 5A à grande stabilité obtenues selon les revendications 1 à 5 à la séparation de n-paraffines et d'isoparaffines à partir de coupes d'hydrocarbures les contenant.


## Patentansprüche

1. Verfahren zur Herstellung von Zeolith 5 A von großer Stabilität mit den folgenden Stufen:
   - die Herstellung eines Zeolith 4 A,
   - der Kalziumaustausch für den genannten Zeolith 4 A,
   - die Agglomeration dieses ausgetauschten Zeoliths mit Hilfe eines tonhaltigen Bindemittels,
   - die thermische Aktivierung des genannten Agglomerats,

   dadurch gekennzeichnet, daß der Zeolith 4 A erhalten wird, indem man von einem Milieu ausgeht, das folgende Zusammensetzung hat:

   $$x\ Na_2O - y\ SiO_2 - Al_2O_3 - z\ H_2O$$

   - in der y (Molverhältnis $SiO_2/Al_2O_3$) zwischen 1 und 2,5 liegt,
   - in der x/y (Molverhältnis $Na_2O/SiO_2$) zwischen 0,9 und 2 liegt,
   - in der z/x (Molverhältnis $H_2O/Na_2O$) zwischen 77 und 200 liegt.

2. Verfahren nach Anspruch 1, dadurch gekennzeichnet, daß der Zeolith 4 A in einem Kristallisationsmilieu erhalten wird, in dem das Molverhaltnis $H_2O/Na_2O$ kleiner als 100 ist.

3. Verfahren nach einem der Ansprüche 1 und 2, dadurch gekennzeichnet, daß die Kristallisation des Zeolith 4 A durch Einfügen von Kristallisationskeimen in die Kristallisationslösung beschleunigt wird.

4. Verfahren nach Anspruch 3, dadurch gekennzeichnet, daß die Kristallisationskeime gemahlene Kristalle des Zeolith 4 A sind.

5. Verfahren nach Anspruch 3, dadurch gekennzeichnet, daß die Kristallisationskeime kleine Kristalle des Zeoliths 4 A mit einer Größe zwischen 0,5 und 1 $\mu$m sind.

6. Verfahren nach Anspruch 3, dadurch gekennzeichnet, daß die Keimbildung durch ein kristallisierendes Gel eingeleitet wird.

7. Kubische Kristalle des Zeolith 5 A mit einer Größe von mehr als 4 Mikron, deren 110 und 100-Flächen Oberflächenanteile mit einem Verhältnis kleiner als 0,05 haben.

8. Einsatz der Zeolithe 5 A mit großer Stabilität, die entsprechend den Ansprüchen 1 bis 5 erhalten wurden, zur Trennung von n-Paraffinen und Isoparaffinen ausgehend von Kohlenwasserstofffraktionen, die sie enthalten.

**Claims**

1. Process for producing high-stability zeolite 5A comprising:
   - the preparation of a zeolite 4A,
   - calcium exchange of the said zeolite 4A,
   - agglomeration of this exchanged zeolite by means of a clay binder,
   - thermal activation of the said agglomerate, characterized in that the zeolite 4A is obtained from a medium whose composition is represented by:

$$xNa_2O\text{-}ySiO_2\text{-}Al_2O_3\text{-}zH_2O$$

   where y ($SiO_2/Al_2O_3$ molar ratio) is between 1 and 2.5,
   where x/y ($Na_2O/SiO_2$ molar ratio) is between 0.9 and 2,
   where z/x ($H_2O/Na_2O$ molar ratio) is between 77 and 200.

2. Process according to Claim 1, characterized in that the zeolite 4A is obtained in a crystallization medium in which the $H_2O/Na_2O$ molar ratio is less than 100.

3. Process according to Claims 1 and 2, characterized in that the crystallization of the zeolite 4A is accelerated by the introduction of crystallization seeds into the crystallization solution.

4. Process according to Claim 3, characterized in that the crystallization seeds are ground crystals of zeolite 4A.

5. Process according to Claim 3, characterized in that the crystallization seeds are small zeolite 4A crystals with a size between 0.5 and 1 $\mu$m.

6. Process according to Claim 3, characterized in that the germination is initiated by a nucleation gel.

7. Cubic zeolite 5A crystals with a size greater than approximately 4 microns, the 110 and 100 faces of which have surface areas which are in a ratio less than 0.05.

8. Application of high-stability zeolite 5A obtained according to Claims 1 to 5 to the separation of n-paraffins and isoparaffins from hydrocarbon cuts containing them.